# FASCICULE DE BREVET EUROPEEN

(11) **EP 3 913 794 B1**
(45) Date de publication et mention de la délivrance du brevet: **05.07.2023**
(21) Numéro de dépôt: 21174481.8
(22) Date de dépôt: 18.05.2021
(51) Int. Cl.: H02S 20/23, H02S 30/00

(54) **SUPPORT POUR CADRE DE PANNEAU PHOTOVOLTAÏQUE, ENSEMBLE, INSTALLATION ET PROCÉDÉ DE MONTAGE CORRESPONDANTS**
HALTERUNG FÜR RAHMEN EINES FOTOVOLTAIKPANEELS, ENTSPRECHENDE ANORDNUNG, ANLAGE UND ENTSPRECHENDES MONTAGEVERFAHREN
SUPPORT FOR THE FRAME OF A PHOTOVOLTAIC PANEL, CORRESPONDING ASSEMBLY, INSTALLATION AND ASSEMBLY METHOD

(30) Priorité: 20.05.2020 FR 2005354
(43) Date de publication de la demande: 24.11.2021
(73) Titulaire: Dome Solar, 44400 Rezé (FR)
(72) Inventeur: DELZENNE, Gauthier, 17137 NIEUL SUR MER (FR)
(74) Mandataire: Ipsilon

(56) Documents cités:
- CN-A- 105 756 299
- CN-A- 108 915 169
- FR-A1- 2 964 399
- FR-A3- 2 953 874

## Description

### DOMAINE DE L'INVENTION

La présente invention concerne de manière générale les supports utilisés pour le montage de panneaux photovoltaïque sur des éléments de couverture.

### ART ANTERIEUR

Pour mettre en place des panneaux sur des bac-aciers, il est connu d'utiliser des rails support qui sont fixés aux ondes du bac par l'intermédiaire de systèmes de platine particuliers et qui supportent les panneaux.

Ces rails présentent une grande longueur de sorte qu'ils s'étendent sur une distance correspondant à plusieurs fois la largeur ou à la longueur du panneau. Par ailleurs les systèmes de platine spécifiques utilisés pour fixer les rails aux ondes font que l'encombrement de l'ensemble des rails et des platines est important.

Il est souhaitable de proposer une nouvelle solution de support de panneaux photovoltaïques qui permet d'améliorer les performances de fonctionnement des panneaux photovoltaïques.

La présente invention a ainsi pour but de proposer un nouveau support permettant de pallier tout ou partie des problèmes exposés ci-dessus.

Le document FR2953874A3 décrit un support ayant un corps avec une paroi du dessus présentant une gorge de fixation, et une paroi du dessous apte à être en regard du sommet d'une onde de la toiture, ainsi que deux ailes aptes a venir en appui des flancs de l'onde.

CN108915169A et FR2964399A1 décrivent également des supports pour cadre de panneau photovoltaïque.

### RESUME DE L'INVENTION

A cet effet, l'invention a pour objet un support, pour cadre de panneau photovoltaïque, caractérisé en ce que ledit support comprend :
- un corps présentant une paroi de dessus muni d'une gorge apte à recevoir une partie d'un système de bride pour la fixation d'un ou plusieurs cadres de panneau photovoltaïque audit support, et une paroi de dessous apte à venir en regard du sommet d'une onde d'un bac ondulé ;
- deux ailes qui délimitent entre elles un passage permettant de positionner les ailes du support en appui sur des flancs opposés d'une onde du bac ondulé ; dans lequel le corps du support présente une hauteur qui est comprise entre 80 et 160 millimètres.

Le support peut aussi comporter une ou plusieurs des caractéristiques suivantes prises dans toute combinaison techniquement admissible.

Selon un aspect particulier, le support présentant un plan médian perpendiculaire à la paroi de dessus et passant par l'axe longitudinal du passage défini entre les deux ailes, le support comprend deux parois latérales opposées qui s'étendent l'une d'un côté dudit plan médian et l'autre de l'autre côté dudit plan médian, chaque paroi latérale présentant une face extérieure convexe.

Selon un aspect particulier, chacune des deux parois latérales comprend une partie supérieure plate et une partie inférieure plate qui sont inclinées l'une par rapport à l'autre.

Selon un aspect particulier, les parties supérieure et inférieure de chaque paroi latérale forment entre elles un angle rentrant compris entre 279 ° et 299 °.

Selon un aspect particulier, la partie supérieure et la partie inférieure de chaque paroi latérale, sont reliées l'une à l'autre par une arête qui s'étend parallèlement à l'axe de passage d'onde défini entre les deux ailes.

Selon un aspect particulier, le support présente une longueur inférieure ou égale à 12 cm.

L'invention concerne également un ensemble comprenant un support tel que décrit ci-dessus et un système de bride permettant de fixer un ou des cadres de panneaux photovoltaïques sur le support correspondant, ledit système de bride comprenant une bride et un système de fixation de la bride au support, le système de fixation comprenant :
- un écrou apte à être logé et retenu dans la gorge de la paroi de dessus du support, et
- une vis apte à traverser la bride et à coopérer avec l'écrou.

L'invention concerne également une installation de panneaux photovoltaïque comprenant :
- des cadres de panneau photovoltaïque ;
- des supports sur lesquels reposent lesdits cadres ;
caractérisée en ce que lesdits supports sont tels que décrits ci-dessus.

Selon un aspect particulier, plusieurs supports supportent chacun un côté d'un cadre de panneau et un côté d'un autre cadre de panneau.

Selon un aspect particulier, chaque panneau photovoltaïque est de type bi-facial.

Selon un aspect particulier, chaque support est fixé sur le bac ondulé par vissage des ailes sur les flancs d'une onde correspondante du bac ondulé.

L'invention concerne également un procédé de mise en place de panneau photovoltaïque sur un bac ondulé, caractérisé en ce que ledit procédé comprend les étapes suivantes :
- pour plusieurs ondes du bac ondulé, fixation de plusieurs supports tels que décrits ci-dessus, le long d'une onde à écartement les uns des autres, par vissage des ailes des supports sur les flancs d'onde ;
- pose des cadres de panneaux photovoltaïques sur les supports ; et
- fixation desdits cadres de panneaux aux supports par des systèmes de bride, chaque système de bride étant couplé à un support par coopération d'un écrou retenu dans la gorge du support correspondant, et une vis traversant une bride du système de bride et coopérant avec l'écrou, la bride présentant une partie maintenue en appui sur le dessus du cadre de panneau par serrage de la vis.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- [Fig. 1] la figure 1 est une vue en perspective d'un support selon un mode de réalisation de l'invention ;

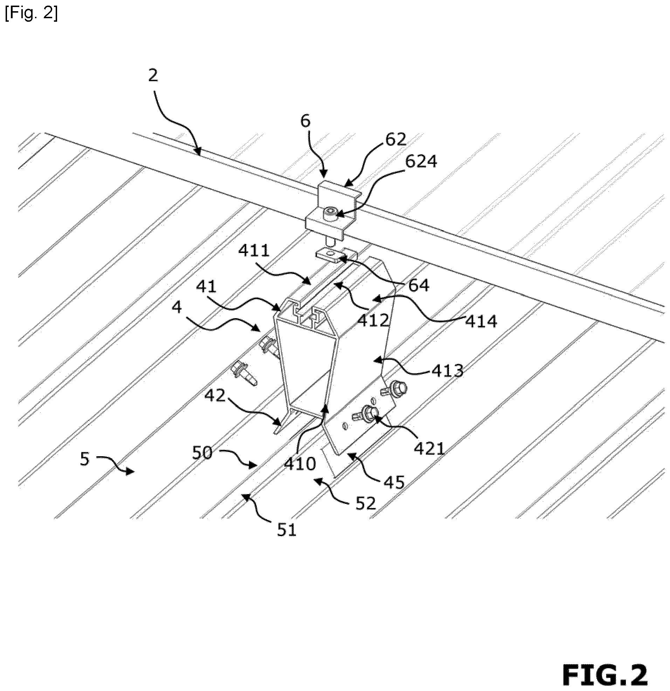

- [Fig. 2] la figure 2 est une vue en perspective éclatée d'une partie d'une installation comprenant un support, un système de fixation par bride et un cadre de panneau photovoltaïque selon un mode de réalisation de l'invention ;

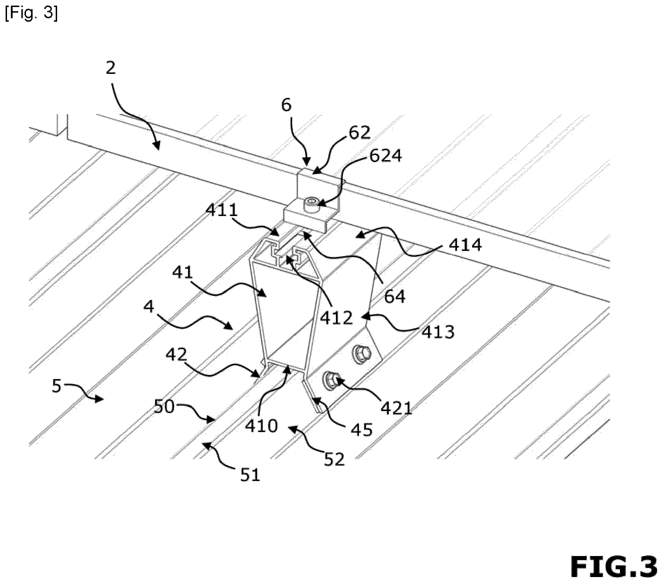

- [Fig. 3] la figure 3 est une vue en perspective à l'état assemblé de la partie d'installation de la figure 2 ;

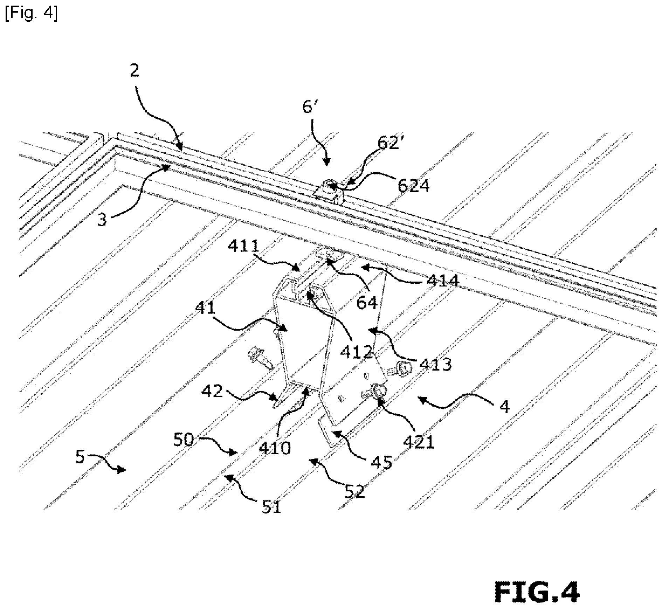

- [Fig. 4] la figure 4 est une vue en perspective à l'état assemblé d'une partie d'une installation comprenant un support, un système de fixation par bride et deux cadres de panneau photovoltaïque fixés sur le support par le système de bride, selon un mode de réalisation de l'invention ;
- [Fig. 5] la figure 5 est une vue schématique simplifiée en coupe transversale d'une partie d'installation comprenant un bac ondulé, un support qui coiffe une onde et un panneau en appui sur le support conformément à un mode de réalisation de l'invention.

### DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

En référence aux figures, il est proposé un support 4 qui permet de porter un côté d'un ou plusieurs cadres de panneaux photovoltaïques pour le montage de panneaux photovoltaïques sur un élément de couverture se présentant sous la forme d'un bac ondulé, usuellement appelé bac-acier. L'installation peut comporter plusieurs bacs.

Dans l'exemple illustré aux figures, une partie seulement d'installation de panneaux est représentée. Ainsi, les figures montrent un seul support et un système de bride correspondant, mais on comprend qu'une installation comprend, pour plusieurs ondes, plusieurs supports répartis le long de chacune de ces ondes à écartement les uns des autres, de manière à pouvoir supporter et fixer le ou les cadres de panneaux en plusieurs endroits.

Les supports proposés trouvent une application particulièrement avantageuse pour les panneaux photovoltaïques de type bi-facial, c'est-à-dire dont les faces recto et verso sont munies chacune de cellules photovoltaïques.

Pour autant les supports peuvent aussi être utilisés pour des panneaux photovoltaïques ne disposant de cellules photovoltaïques que sur le dessus (recto) du panneau.

### Support

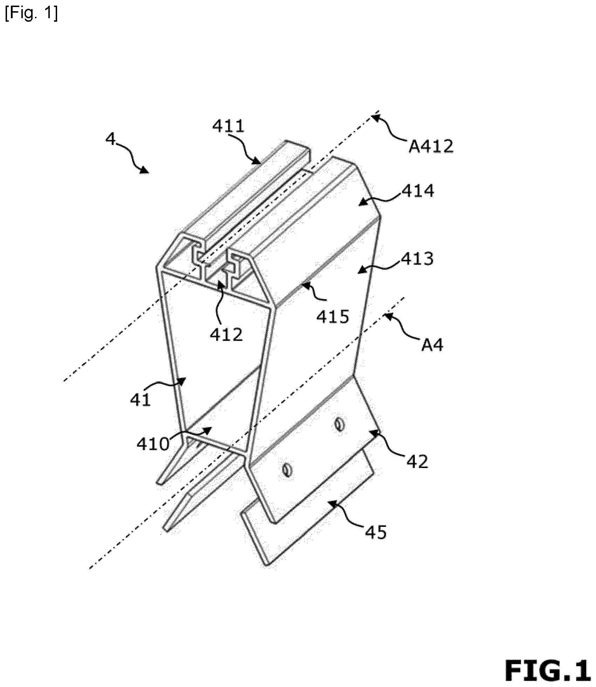

Comme illustré à la Figure 1, le support 4 comprend un corps 41 qui présente une paroi de dessus 411 et une paroi de dessous 410. Une gorge 412 est ménagée dans la paroi de dessus pour recevoir une partie 62, 62' d'un système de bride 6, 6' qui permet la fixation d'un ou plusieurs cadres de panneau photovoltaïque audit support.

Le côté supporté du cadre du ou de chaque panneau s'étend orthogonalement à l'axe A412 de la gorge 412 du support qui porte ledit côté de panneau.

La paroi de dessous 410 du corps 41 est apte à venir en regard et en appui sur le sommet d'une onde 50 d'un bac 5 ondulé. Le bac ondulé est usuellement appelé bac-acier. Selon un aspect particulier le bac est réalisé en aluminium.

Le support comprend aussi deux ailes 42 qui sont inclinées l'une par rapport à l'autre et qui délimitent entre elles un passage d'axe A4 permettant de positionner les ailes du support 4 en appui sur des flancs 52 opposés d'une onde 50 du bac ondulé. Les ailes 42 sont aptes à chevaucher l'onde 50 pour un positionnement du support 4 en appui sur l'onde correspondante.

Le corps 41 du support 4 présente une hauteur H41, prise entre la paroi de dessous 410 et la paroi de dessus 411, qui est comprise entre 80 et 160 millimètres.

Pour une hauteur H50 d'onde de bac-acier de 40 millimètres, on obtient ainsi une hauteur H2 de panneaux par rapport aux creux d'ondes du bac qui est comprise entre 120 et 200 millimètres, de préférence 162 millimètres.

L'utilisation de tels supports 4 permet d'établir des liaisons locales entre les ondes de bac-acier et les panneaux, avec une grande hauteur sous les panneaux, ce qui permet de se passer de rails et ainsi de bénéficier d'un meilleur rendement résultant des réflexions lumineuses sous les panneaux, de sorte qu'un tel support trouve une application particulièrement avantageuse dans le cas de panneaux de type bi-facial.

On comprend en effet, que de tels supports locaux permettent de résoudre les problèmes d'encombrement et de perturbations lumineuses et de ventilation posés par l'utilisation de rails comme c'est le cas dans l'état de la technique.

Le fait que le ou les panneaux soient ainsi écartés du bac ondulé grâce aux supports locaux sur lesquels ils reposent, permet une ventilation qui améliore les performances des cellules situées sur la face recto d'un panneau, et les performances des cellules situées au recto et au verso d'un panneau de type bi-facial.

Les ailes 42 prolongent la partie inférieure de chacune des deux parois latérales du support en étant inclinée en sens opposé de la partie inférieure 413 de la paroi latérale correspondante.

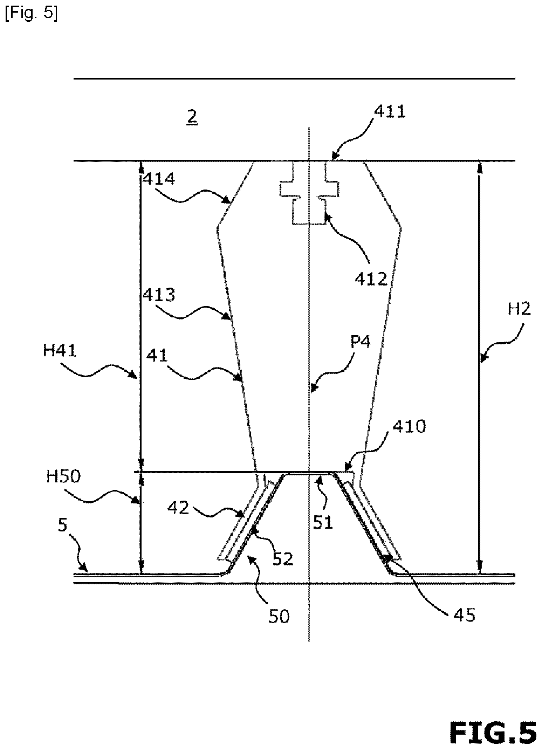

Comme illustré à la Figure 5, le support 4 présente un plan médian P4 perpendiculaire à la paroi de dessus 411 et passant par l'axe longitudinal A4 du passage défini entre les deux ailes 42. La gorge 412 présente un axe A412 parallèle à l'axe A4.

Dans l'exemple illustré aux figures, le support est creux. En particulier le support 4 est traversant selon l'axe A4.

### Facettes réfléchissantes du support

Le support 4 comprend deux parois latérales opposées qui s'étendent l'une d'un côté dudit plan médian et l'autre de l'autre côté dudit plan médian, chaque paroi latérale présentant une face extérieure convexe.

Chaque paroi latérale est ainsi saillante vers l'extérieur, ce qui permet de renvoyer une partie des rayons lumineux qu'elle reçoit, soit directement vers la face de dessous (verso) d'un ou de plusieurs panneaux, soit indirectement par réflexion sur le bac ondulé.

Chaque paroi latérale du support présente ainsi plusieurs facettes (ou pans) formant ensemble une face extérieure latérale de forme générale convexe, ce qui permet de bien réfléchir les rayons sur le dessous du panneau.

Dans l'exemple illustré aux figures, chacune des deux parois latérales comprend une facette supérieure 414, formée par une partie plate orientée vers les panneaux, et une facette inférieure 413 formée par une partie plate orientée vers le bac acier.

Ces facettes 414, 413 sont inclinées l'une par rapport à l'autre. Les facettes supérieure 414 et inférieure 413 de chaque paroi latérale forment entre elles un angle rentrant de préférence compris entre 279 ° et 299 ° (ou encore un angle saillant compris entre 61° et 81°).

L'angle formé entre les facettes de chaque paroi latérale permet de réfléchir efficacement la lumière.

Selon un aspect particulier, le support 4 présente, selon une direction parallèle à l'axe A4, une longueur inférieure ou égale à 12 cm.

Selon un aspect particulier, l'arête de liaison 415 des facettes est parallèle audit axe A4 de passage.

Dans l'exemple illustré aux figures, l'arête 415 est plus proche de la paroi de dessus 411 du corps du support que de la paroi de dessous 410.

Selon un mode de réalisation, la facette supérieure 414 présente une surface plus petite que celle de la facette inférieure 413.

La lumière peut être réfléchie par la facette supérieure directement vers les panneaux et peut être réfléchie par la facette inférieure vers le bac ondulé qui renvoie alors les rayons correspondant vers un ou des panneaux.

Les supports permettent de placer les panneaux à une hauteur adaptée vis-à-vis des bacs ondulés pour assurer l'exposition à la lumière, via les bacs, des cellules photovoltaïques placées au verso des panneaux dans le cas de panneaux de type bi-facial. Avantageusement, la hauteur entre la plage du bac acier et le cadre du module (panneau) photovoltaïque est de 160 mm, ce qui permet de bénéficier d'une lame d'air et lumière qui accentue la production des modules photovoltaïques.

La faible dimension en longueur des supports, en particulier par comparaison avec des solutions de support utilisant des rails qui s'étendent sur une grande longueur, correspondant par exemple à la largeur ou longueur de plusieurs panneaux, permet de combiner les fonctions de support de panneaux, tout en minimisant les ombres portées résultant de la présence des supports qui peuvent diminuer l'ensoleillement.

Une telle conception de support permet un gain important de production d'énergie des panneaux, en particulier dans le cas de panneaux (ou modules) bi faciaux.

Avantageusement, il est prévu de positionner plusieurs supports sur plusieurs ondes d'un bac, la distance entre deux supports étant par exemple inférieure ou égale à 210 cm. Les supports forment ainsi des liaisons ponctuelles entre le bac et les panneaux à la différence des rails connus de l'état de la technique. L'espacement entre les supports le long des ondes permet de libérer un espace de passage de la lumière et de ventilation.

Une plaquette 45, de préférence en Mousse EPDM, est interposée entre chaque aile 42 du support 4 et le flanc 52 correspondant de l'onde 50 du bac ondulé 5.

### Système de bride

Les panneaux reposent sur les supports qui forment des plots fixés localement sur des ondes et les panneaux sont fixés aux supports par des systèmes de bride.

Pour fixer le côté d'un panneau qui forme tout ou partie de la périphérie extérieure d'un ensemble de panneaux, sur un ou des supports qui ne portent pas d'autre panneau, on peut utiliser un système de bride comprenant une bride qui présente une seule patte d'appui.

Pour fixer le côté d'un panneau sur un support et le côté d'un autre panneau sur ce même support, c'est-à-dire pour des côtés de panneaux en regard l'un de l'autre qui s'étendent à l'intérieur d'un ensemble de panneaux, le système de bride comprend une bride qui présente deux pattes d'appui.

Chaque système de bride comprend en outre un système de fixation de la bride au support 4, le système de fixation comprenant une pièce 64 formant écrou logée et retenue dans la gorge 412. L'écrou peut être inséré dans la gorge par une extrémité débouchante. L'écrou est retenu dans la gorge 412 selon une direction orthogonale à la paroi supérieure 411. La gorge présente en particulier une section transversale en croix, la branche de la croix parallèle à la paroi supérieure 411 formant un logement de retenue de l'écrou 64. Une vis 624 traverse la bride 62, 62' et coopère avec l'écrou 64 pour permettre de serrer la bride contre le panneau et le support, la tête de vis venant en appui contre la bride.

On peut prévoir qu'au moins une partie des brides présente une ou des pattes d'appui munie d'éléments métalliques, telles que des griffes ou lames, configurés pour inciser un des côtés du ou des cadres 2, 3 par appui sur lesdits cadres 2, 3 pour assurer une continuité électrique entre les cadres 2, 3 et la bride 62, 62' afin de permettre un raccordement à la terre de l'ensemble des cadres de panneaux.

### Procédé

Un exemple de mise en place de panneaux photovoltaïques 2, 3 sur un bac ondulé 5 est présenté ci-dessous.

Des supports sont fixés le long de plusieurs ondes, qui sont de préférence distantes les unes des autres selon l'écartement entre les ondes et selon la taille des panneaux.

Le long d'une onde 50 donnée, plusieurs supports sont fixés à écartement les uns des autres, par vissage des ailes 42 des supports 4 sur les flancs 52 d'onde.

Les support 4 sont fixés en étant posés avec contact de la face dessous 410 du corps 41 et du sommet 51 de l'onde 50 correspondante. Selon un aspect particulier, des plaquettes 45 sont interposées entre les ailes 42 du support et les flancs d'onde. Chaque support 4 est fixé par vissage des ailes 42 sur les flancs 52 d'une onde 50 correspondante du bac 5 ondulé. Des vis auto-foreuses peuvent être utilisées.

Les supports sont répartis en fonction du nombre et de l'agencement des panneaux souhaités. Selon un aspect particulier, on peut prévoir que chaque panneau repose sur quatre supports, en particulier que deux côtés opposés d'un panneau reposent chacun sur deux supports.

Les cadres de panneaux photovoltaïques 2,3 sont posés sur les supports 4 et fixés aux supports 4 par les systèmes 6, 6' de bride. Comme expliqué ci-dessus, on prévoit d'utiliser un système 6' de bride à deux pattes d'appui lorsqu'il faut fixer deux cadres de panneau sur un même support et un système de bride 6 à une patte d'appui lorsqu'il faut fixer un seul cadre de panneau sur le support 4.

Pour chaque système de bride 6, 6', l'opérateur introduit un écrou 64 dans la gorge correspondante du support par une extrémité ouverte de la gorge. L'opérateur prépositionne la bride avec la ou les pattes en appui du ou des cadres et fait passer une vis 624 au travers d'un orifice correspondant de la bride 62, 62'. L'opérateur serre la vis 624 qui coopère avec l'écrou 64 pour maintenir la ou chaque patte de la bride 62, 62' en appui du ou de chaque cadre de panneau correspondant.

L'invention n'est pas limitée aux modes de réalisation illustrés dans les dessins.

De plus, le terme « comprenant » n'exclut pas d'autres éléments ou étapes.

## Revendications

1. Support (4), pour cadre (2, 3) de panneau photovoltaïque, ledit support (4) comprenant:
- un corps (41) présentant une paroi de dessus (411) muni d'une gorge (412) apte à recevoir une partie (64) d'un système de bride pour la fixation d'un ou plusieurs cadres de panneau photovoltaïque audit support, et une paroi de dessous (410) apte à venir en regard du sommet d'une onde (50) d'un bac (5) ondulé ;
- deux ailes (42) qui délimitent entre elles un passage permettant de positionner les ailes (42) du support (4) en appui sur des flancs (52) opposés d'une onde (50) du bac (5) ondulé ;
**caractérisé en ce que** le corps (41) du support (4) présente une hauteur qui est comprise entre 80 et 160 millimètres.

2. Support (4) selon la revendication 1, dans lequel, le support (4) présentant un plan médian (P4) perpendiculaire à la paroi de dessus (411) et passant par l'axe longitudinal (A4) du passage défini entre les deux ailes (42), le support (4) comprend deux parois latérales opposées qui s'étendent l'une d'un côté dudit plan médian et l'autre de l'autre côté dudit plan médian, chaque paroi latérale présentant une face extérieure convexe.

3. Support selon la revendication 2, dans lequel chacune des deux parois latérales comprend une partie supérieure (414) plate et une partie inférieure (413) plate qui sont inclinées l'une par rapport à l'autre.

4. Support selon la revendication 3, dans laquelle les parties supérieure (414) et inférieure (413) de chaque paroi latérale forment entre elles un angle rentrant compris entre 279 ° et 299 °.

5. Support selon l'une quelconque des revendications 3 ou 4, dans lequel la partie supérieure (414) et la partie inférieure (413) de chaque paroi latérale, sont reliées l'une à l'autre par une arête (415) qui s'étend parallèlement à l'axe de passage (A4) d'onde défini entre les deux ailes.

6. Support selon l'une quelconque des revendications précédentes, dans lequel le support (4) présente une longueur inférieure ou égale à 12 cm.

7. Ensemble comprenant un support (4) selon l'une quelconque des revendications précédentes et un système (6) de bride permettant de fixer un ou des cadres (2, 3) de panneaux photovoltaïques sur le support correspondant, ledit système (6) de bride comprenant une bride (62, 62') et un système de fixation de la bride au support (4), le système de fixation comprenant :
- un écrou (64) apte à être logé et retenu dans la gorge (412) de la paroi de dessus (411) du support (4), et
- une vis (624) apte à traverser la bride (62, 62') et à coopérer avec l'écrou (64).

8. Installation de panneaux photovoltaïque comprenant :
- des cadres (2, 3) de panneau photovoltaïque ;
- des supports (4) sur lesquels reposent lesdits cadres (2, 3) ;
**caractérisée en ce que** lesdits supports (4) sont conformes à l'une quelconque des revendications 1 à 6.

9. Installation selon la revendication 8, dans laquelle plusieurs supports (4) supportent chacun un côté d'un cadre (2) de panneau et un côté d'un autre cadre (3) de panneau.

10. Installation selon la revendication 8 ou 9, dans laquelle chaque panneau photovoltaïque (2, 3) est de type bi-facial.

11. Installation selon l'une des revendications 8 à 10, dans laquelle chaque support (4) est fixé sur un bac ondulé par vissage des ailes (42) sur les flancs (52) d'une onde (50) correspondante du bac ondulé.

12. Procédé de mise en place de panneau photovoltaïque (2, 3) sur un bac ondulé (5), **caractérisé en ce que** ledit procédé comprend les étapes suivantes :
- pour plusieurs ondes (50) du bac ondulé (5), fixation de plusieurs supports (4) conformes à l'une quelconque des revendications 1 à 6, le long d'une onde (50) à écartement les uns des autres, par vissage des ailes (42) des supports (4) sur les flancs (52) d'onde ;
- pose des cadres de panneaux photovoltaïques (2,3) sur les supports (4) ; et
- fixation desdits cadres de panneaux aux supports (4) par des systèmes (6, 6') de bride, chaque système de bride étant couplé à un support (4) par coopération d'un écrou (64) retenu dans la gorge (412) du support (4) correspondant, et une vis (624) traversant une bride (62, 62') du système de bride (6) et coopérant avec l'écrou (64), la bride (62, 62') présentant une partie maintenue en appui sur le dessus du cadre de panneau par serrage de la vis (624).

## Patentansprüche

1. Träger (4) für einen Rahmen (2, 3) eines Photovoltaikmoduls, wobei der Träger umfasst:
- ein Hauptteil (41) mit einer Oberwand (411), die mit einer zur Aufnahme eines Teils (64) eines Flanschsystems zur Befestigung eines oder mehrerer Photovoltaikmodule am Träger geeigneten Ausnehmung (412) und einer Unterwand (410), die geeignet ist, einem Wellenberg (50) einer Wellblechschale (5) zugewandt zu sein, versehen ist;
- zwei Flügel (42), die einen Durchgang abgrenzen, der die Positionierung der Flügel (42) des Trägers (4) in Auflage auf gegenüberliegenden Seiten (52) einer Welle (50) der Schale (5) ermöglicht;
**dadurch gekennzeichnet, dass**:
das Hauptteil (41) des Trägers (4) eine Höhe zwischen 80 und 160 mm aufweist.

2. Träger (4) nach Anspruch 1, wobei:
der Träger (4) eine senkrecht zur Oberwand (411) und durch die Längsachse (A4) des zwischen den Flügeln (42) abgegrenzten Durchgangs hindurch verlaufende Medianebene (P4) aufweist, und der Träger zwei gegenüberliegende Seitenwände, von denen eine sich auf einer Seite der Medianebene und die andere auf einer anderen Seite der Medianeben erstreckt, wobei jede Seitenwand eine konvexe Außenfläche aufweist.

3. Träger nach Anspruch 2,
wobei jede der beiden Seitenwände einen flachen Oberteil (414) und einen flachen Unterteil (413) umfasst, die einander gegenüber geneigt sind.

4. Träger nach Anspruch 3,
wobei der Ober- (414) und Unterteil (413) jeder Seitenwand zusammen einen Einsetzwinkel zwischen 270 und 299 ° bilden.

5. Träger nach einem der Ansprüche 3 oder 4,
wobei der Ober- (414) und Unterteil (413) jeder Seitenwand über eine sich parallel zur zwischen den beiden Flügeln definierten Wellendurchgangsachse (A4) erstreckende Kante (415) miteinander verbunden sind.

6. Träger nach einem der vorstehenden Ansprüchhe,
wobei der Träger (4) eine Länge kleiner oder gleich 12 cm aufweist.

7. Einrichtung, umfassend einen Träger (4) nach einem der vorstehenden Ansprüche und ein Flanschsystem (6), das die Befestigung mindestens eines Rahmens (2, 3) für Photovoltaikmodule am entsprechenden Träger ermöglicht, wobei das Flanschsystem (6) einen Flansch (62, 62') und ein System zur Befestigung des Flansches am Träger (4) umfasst, wobei das Befestigungssystem umfasst:
- eine Mutter (64), die geeignet ist, in der Ausnehmung (412) der Oberwand (411) des Trägers (4) aufgenommen und festgehalten zu werden, und
- eine Schraube (624), die geeignez ist, den Flasch (62, 62') zu durchqueren und mit der Mutter (64) zusammenzuwirken.

8. Photovoltaikeinrichtung, umfassend:
- Rahmen (2, 3) für Photovoltaikmodule;
- träger (4), auf denen die Rahmen (2, 3) aufliegen; **dadurch gekennzeichnet, dass** die Träger (4) einem der Ansprüche 1 - 6 entsprechen.

9. Einrichtung nach Anspruch 8,
wobei mehrere Träger (4) jeweils eine Seite eines Rhamens (2) eines Moduls und eine Seite eines anderen Rahmens (3) eines Moduls tragen.

10. Einrichtung nach Anspruch 8 oder 9,
wobei jedes Photovoltaikmodul (2, 3) zweiseitig ist.

11. Einrichtung nach einem der Ansprüche 8 - 10,
wobei jeder Träger (4) auf einer Wellblechschale befestigt ist durch Festschrauben der Flügel (42) auf den Seiten (52) einer entsprechenden Welle (50) der Wellblechschale.

12. Verfahren zur Installation eines Photovoltaikmoduls (2, 3) auf einer Wellblechschale (5),
**dadurch gekennzeichnet, dass** das Verfahren folgende Schritte umfasst:
- für mehrere Wellen (50) der Wellblechschale (5): Befestigen mehrerer Träger (4) nach einem der Ansprüche 1 - 6 entlang einer Welle (50) in einem Abstand zueinander durch Verschrauben der Flügel (42) der Träger (4) auf den Seiten (52) der Welle;
- Positionieren von Rahmen für Photovoltaikmodule (2, 3) auf den Trägern (4) und
- Befestigen der Rahmen für Photovoltaikmodule (4) mittels Flanschsysteme (6, 6'), wobei jedes Flanschsystem durch Zusammenwirken einer in der Ausnehmung (412) des entsprechenden Trägers (4) festgehaltenen Mutter (64) und einer einen Flansch (62, 62') des Flanschsystems (6) durchquerenden, mit der Mutter (64) zusammenwirkenden Schraube (624) mit einem Träger gekoppelt ist, wobei der Flansch (62, 62') einen Teil aufweist, der in Auflage auf der Unterseite des Rahmens des Moduls durch Festziehen der Schraube (624) gehalten wird.

## Claims

1. Support (4) for a frame (2, 3) of a photovoltaic panel, the support comprising:
- a body (41) having an upper wall (411) that is equipped with a recess (412) suited to receive a part (64) of a flange system to attach one or more photovoltaic panels to the support and a lower wall (410) that is suited to face a crest (50) of a corrugation of a corrugated shell (5);
- two wings (42), delimiting a passage allowing for the positioning of the wings (42) of the support (4) supported on opposite sides (52) of a corrugation (50) of the shell (5);
**characterised in that**:
the body (41) of the support (4) has a height between 80 and 160 mm.

2. Support (4) according to claim 1, wherein:
the support (4) has a median plane (P4) perpendicular to the upper wall (411) and through the longitudinal axis (A4) of the passage delimited between the wings (42), and the support (4) has two opposite side walls, one of which extends on one side of the median plane and the other extends on the other side of the median plane, wherein each side wall has a convex outer surface.

3. Support according to claim 2,
wherein each of the two side walls comprises a flat upper part (414) and a flat lower part (413) that are inclined relative to one another.

4. Support according to claim 3,
wherein the upper (414) and lower part (413) of each side wall together form an internal angle between 270 and 299 °.

5. Support according to either of claims 3 or 4,
wherein the upper (414) and lower part (413) of each side wall are connected via an edge (415) extending parallel to the corrugation passage axis (A4) defined between the two wings.

6. Support according to any of the foregoing claims,
wherein the support (4) has a length of less than or equal to 12 cm.

7. Assembly comprising a support (4) according to any of the foregoing claims and a flange system (6) that allows for one or more frames (2, 3) for photovoltaic panels to be affixed to the corresponding support, wherein the flange system (6) comprises a flange (62, 62') and a system for attaching the flange to the support (4), wherein the attachment system comprises:
- a nut (64) that is suited to be received and held in the recess (412) of the upper wall (411) of the support (4), and
- a screw (624) that is suited to traverse the flange (62, 62') and cooperate with the nut (64).

8. Photovoltaic panel installation, comprising:
- frames (2, 3) for photovoltaic panels;
- supports (4), on which the frames (2, 3) are supported, **characterised in that** the supports (4) are in accordance with any of claims 1 - 6.

9. Installation according to claim 8,
wherein several supports (4) each support one side of a frame (2) of a panel and one side of another frame (3) of a panel.

10. Installation according to claim 8 or 9,
wherein each photovoltaic panel (2, 3) is two-sided.

11. Installation according to any of claims 8-10,
wherein each support (4) is affixed to a corrugated shell by screwing the wings (42) to the sides (52) of a corresponding corrugation (50) of the corrugated shell.

12. Method for installing a photovoltaic panel (2, 3) on a corrugated shell (5),
**characterised in that** the method comprises the following steps:
- for several corrugations (50) of the corrugated shell (5): Attaching several supports (4) according to any of claims 1 - 6 along a corrugation (50) in a distance from one another by screwing the wings (42) of the supports (4) on the sides (52) of the corrugation;
- Positioning frames of photovoltaic panels (2, 3) on the supports (4), and
- Attaching the frames for photovoltaic panels (4) by means of flange systems (6, 6'), wherein each flange system is coupled with a support (4) by cooperation between a nut (64) held within the recess (412) of the corresponding support (4) and a screw (624) traversing a flange (62, 62') of the flange system (6) and cooperating with the nut (64), wherein the flange (62, 62') has a part that is supported on the top of the frame of the panel by tightening the screw (624).
